# EUROPÄISCHE PATENTSCHRIFT

(11) **EP 0 548 820 B1**
(45) Veröffentlichungstag und Bekanntmachung des Hinweises auf die Patenterteilung: **06.03.1996**
(21) Anmeldenummer: 92121534.9
(22) Anmeldetag: 18.12.1992
(51) Int. Cl.: B65G 61/00, B65H 19/12, B65H 67/06

(54) **Transportvorrichtung für Bobinen aus bahnförmigem Verpackungsmaterial**
Transport device for bobbins of weblike packaging material
Dispositif de transport pour bobines de matériau d'emballage en forme de bande

(30) Priorität: 24.12.1991 DE 4143044
(43) Veröffentlichungstag der Anmeldung: 30.06.1993
(73) Patentinhaber: Maschinenfabrik Alfred Schmermund GmbH & Co., D-58285 Gevelsberg (DE)
(72) Erfinder: Beckmann, Harald, W-5820 Gevelsberg (DE)
(74) Vertreter: Sparing - Röhl - Henseler Patentanwälte

(56) Entgegenhaltungen:
- EP-A- 0 053 588
- DE-A- 3 501 692
- DE-A- 4 036 128
- FR-A- 2 623 679
- GB-A- 2 205 300

## Beschreibung

Die Erfindung betrifft eine Transportvorrichtung für Bobinen aus bahnförmigem Wickel-, insbesondere Verpackungsmaterial von einem Vorrat zu einer Verbrauchsstation einer Verarbeitungs-, insbesondere Zigarettenverpackungsmaschine mit einem in drei zueinander senkrechten Richtungen verfahrbaren, an einer Halterung befindlichen Greifer, insbesondere Backengreifer, zum Ergreifen jeweils einer Bobine.

Eine derartige Transportvorrichtung ist beispielsweise aus der DE-A 3 501 692 bekannt, um einzelne Bobinen von einer Unterlage, etwa einer Palette, auf der eine Vielzahl von Bobinen neben- und übereinander gestapelt als Vorrat angeordnet ist, mittels eines Backengreifers aufzunehmen und an eine Verbrauchsstation einer Zigarettenverpackungmaschine zu übergeben. Um die Aufnahme und Übergabe vollautomatisch durchführen zu können, ist der Greifer an einem höhenverstellbaren Rahmen durch unter rechtwinklig zueinander verlaufende Linearantriebe in einer Ebene verfahrbar, wobei am Rahmen Sensoren angeordnet sind, die jeweils die in einer Ebene liegenden Bobinen erfassen und die Höhenverstellung des Rahmens steuern, während am Greifer Sensoren zur Ausrichtung des Greifers zur jeweils zu erfassenden Bobine angeordnet sind. Ein derartiger Aufbau ist relativ aufwendig und voluminös und erfordert einen großen Steueraufwand.

Aufgabe der Erfindung ist es, eine Transportvorrichtung der eingangs genannten Art zu schaffen, die sowohl in bezug auf die Konstruktion als auch in bezug auf den Steueraufwand vereinfacht ist und einen geringen Raumbedarf aufweist.

Diese Aufgabe wird dadurch gelöst, daß der über die Halterung verfahrbare Greifer zwischen zwei winkelförmig zueinander angeordneten, mit dem jeweiligen Bobinenumfang in Eingriff bringbaren und verschwenkbaren Leisten der Halterung auf einer von zwei feststehenden Endbereichen der Halterung definierten Winkelhalbierenden fest zentriert angeordnet ist, wobei die Halterung mit Sensoren zum Feststellen der Greiferposition durch Kontakt der Leisten mit dem Bobinenumfang unter einem vorbestimmten Winkel zwischen der jeweiligen Leiste und der Winkelhalbierenden versehen sind.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

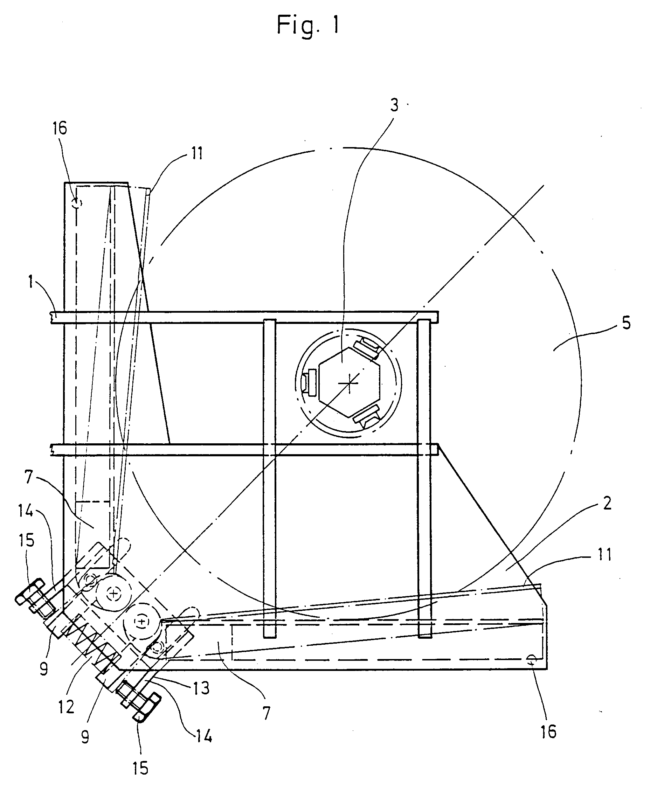

Fig. 1 zeigt in Draufsicht ausschnittweise eine Transportvorrichtung.

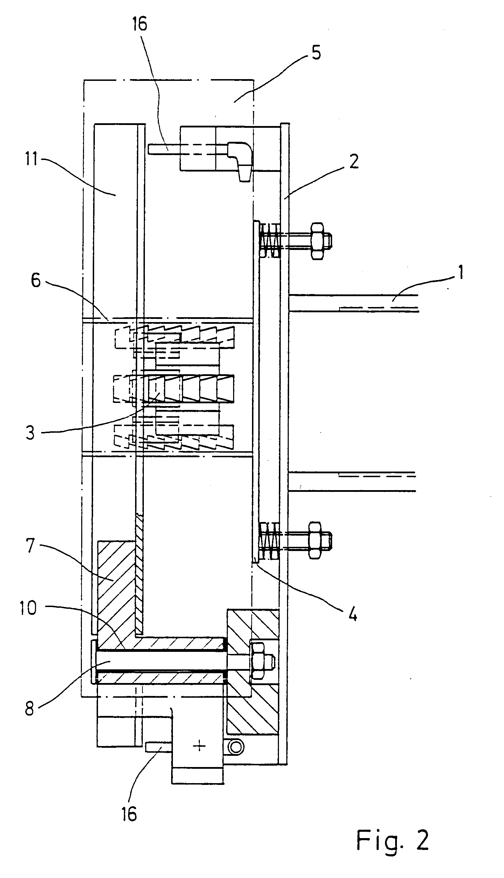

Fig. 2 zeigt die Transportvorrichtung von Fig. 1 in Seitenansicht.

Die dargestellte Transportvorrichtung umfaßt einen Transportarm 1, wie er beispielsweise an der Zigarettenverpackungsmaschine der DE-OS 40 41 865 vorgesehen ist, an dessen freiem Ende eine im wesentlichen als winkelförmige Platte ausgebildete Halterung 2 angeordnet ist. Die Halterung 2 dient zur Aufnahme eines Dreibackengreifers 3, der an der dem Transportarm 1 zugewandten Seite mit einer Platte 4 versehen ist, die federnd gegenüber der Halterung 2 abgestützt ist. Der Dreibackengreifer 3 dient zum Ergreifen und Halten einer Bobine 5 aus bahnförmigem Zigarettenverpackungsmaterial von einem beispielsweise auf einer Palette angeordneten Vorrat von lagenweise neben- und übereinander angeordneten Bobinen 5. Die Bobinen 5 besitzen jeweils eine Kernhülse 6, in die der Dreibackengreifer 3 einfährt, um durch anschließendes Spannen mit der Kernhülse 6 in Halteeingriff zu gelangen, so daß die ergriffene Bobine 5 zu einer Verbrauchsstation einer Zigarettenverpackungsmaschine transportiert werden kann. Dort wird die Bobine 5 an eine Spule übergeben und das zugängliche freie Ende des Verpackungsmaterials in einen entsprechenden Förderweg eingefädelt.

Die Halterung 2 trägt zwei als Fühler dienende Hebel 7, die im Scheitelbereich der winkelförmigen Halterung 2 um an der Halterung 2 befestigte Bolzen 8 drehbar angelenkt sind, wobei sich die Achsen der Bolzen 8 parallel zur Achse des Dreibackengreifers 3 erstrecken, der sich zentriert zwischen den beiden Hebeln 7 auf der Winkelhalbierenden hierzwischen befindet.

Die Hebel 7 besitzen jeweils einen doppelhebelartigen Endabschnitt 9 mit einer auf dem Bolzen 8 gelagerten Buchse 10 sowie eine mit dem Endabschnitt 9 verbundene im Schnitt winkelförmige, zur Halterung 2 beabstandete Leiste 11. Die Länge der Leisten 11 ist zweckmäßig derart bemessen, daß sich die Hebel 7 im wesentlichen über den Durchmesser der Bobinen 5 erstrecken. Die beiden Hebel 7 werden mittels einer gemeinsamen Druckfeder 12, die an den den Leisten 11 abgewandten Enden der Endabschnitte 9 angreift, einwärts in Richtung auf den Dreibackengreifer 3 federvorgespannt.

Über Justiereinrichtungen 13 läßt sich der von den beiden Hebeln 7 eingeschlossene Winkel einstellen. Jede Justiervorrichtung 13 umfaßt einen an der Halterung 2 in Richtung der Winkelhalbierenden verstellbar befestigten Schenkel 14, der eine mit dem benachbarten freien Ende des Hebels 7 in Eingriff stehende Justierschraube 15 trägt.

Die Halterung 2 trägt ferner an ihren Endbereichen zwei im Winkel von 90° angeordnete Sensoren 16, die durch die freien Enden der Leisten 11 der Hebel 7 zur Ansprache gebracht werden, wenn sich der entsprechende Hebel 7 zur Winkelhalbierenden in einem Winkel von 45° befindet.

Dementsprechend erlaubt es diese Transportvorrichtung, den Transportarm 1 linear in einer Ebene senkrecht zu den Achsen der Bobinen 5 des Vorrats zu verfahren, bis eine Leiste 11 mit einer aufzunehmenden Bobine 5 in Eingriff gelangt. Hierzu steht die Leiste 11 gegenüber dem Dreibackengreifer 3 entsprechend vor, so daß letzterer nicht gegen den Außenumfang der Bobine 5 stößt und damit den Auffindvorgang nicht behindert. Wenn die Leiste 11 soweit mit der Bobine 5 in Eingriff gelangt ist, daß der zugehörige Sensor 16 betätigt wird, wird diese erste Bewegung des Transportarms 1 gestoppt und eine zweite lineare Bewegung senkrecht zu der ersten in der gleichen Ebene in Gang gesetzt. Zwangsläufig gelangt dann die zweite Leiste 11 mit der Bobine 5 in Eingriff, so daß schließlich auch der zweite Sensor 16 betätigt wird. Hierdurch wird die Transportarmbewegung in dieser Ebene gestoppt und der Transportarm 1 auf die Bobine 5 abgesenkt, bis der Dreibackengreifer 3 in die Kernhülse 6 entsprechend eingeführt ist und sich die Platte 4 mit der Oberseite der Bobine 5 in Eingriff befindet. Durch Spannen des Dreibackengreifers 3 wird die Bobine 5 ergriffen und ist nun transportierbar.

Auf diese Weise läßt sich eine Bobine 5 nach der anderen von einer Palette aufnehmen, ohne daß eine komplizierte Steuerung der Bewegung des Transportarms 1 oder anderer Einrichtungen notwendig wäre, wobei eine automatische Zentrierung des Dreibackengreifers 3 zur Kernhülse 6 der jeweiligen Bobine 5 erfolgt.

## Patentansprüche

1. Transportvorrichtung für Bobinen (5) aus bahnförmigem Wickel-, insbesondere Verpackungsmaterial von einem Vorrat zu einer Verbrauchsstation einer Verpackungs-, insbesondere einer Zigarettenverpackungsmaschine, mit einem in drei zueinander senkrechten Richtungen verfahrbaren, an einer Halterung (2) befindlichen Greifer (3), insbesondere Backengreifer, zum Ergreifen jeweils einer Bobine (5), dadurch **gekennzeichnet**, daß der über die Halterung (2) verfahrbare Greifer (3) zwischen zwei winkelförmig zueinander angeordneten, mit dem jeweiligen Bobinenumfang in Eingriff bringbaren und verschwenkbaren Leisten (11) der Halterung (2) auf einer von zwei feststehenden Endbereichen der Halterung (2) definierten Winkelhalbierenden fest zentriert angeordnet ist, wobei die Halterung (2) mit Sensoren (16) zum Feststellen der Greiferposition durch Kontakt der Leisten (11) mit dem Bobinenumfang unter einem vorbestimmten Winkel zwischen der jeweiligen Leiste (11) und der Winkelhalbierenden versehen ist.

2. Transportvorrichtung nach Anspruch 1, dadurch gekennzeichnet, daß die Halterung (2) an einem Transportarm (1) angeordnet ist.

3. Transportvorrichtung nach Anspruch 1 oder 2, dadurch gekennzeichnet, daß die Leisten (11) als Teile von in Richtung zum Greifer (3) federvorgespannten Hebeln (7) ausgebildet sind, die im wesentlichen benachbart zueinander schwenkbar angelenkt sind.

4. Transportvorrichtung nach Anspruch 3, dadurch gekennzeichnet, daß die beiden Hebel (7) durch eine gemeinsame Druckfeder (12) vorgespannt sind.

5. Transportvorrichtung nach einem der Ansprüche 1 bis 4, dadurch gekennzeichnet, daß die Leisten (11) in bezug auf die Winkelhalbierende justierbar angeordnet sind.

6. Transportvorrichtung nach einem der Ansprüche 1 bis 5, dadurch gekennzeichnet, daß der Greifer (3) gegenüber der Halterung (2) federnd abgestützt ist.

## Claims

1. Transport device for bobbins (5) of web-type wrapping material, in particular packaging material, from a supply to a consumption station of a packaging machine, in particular a cigarette packaging machine, having a gripper (3), in particular a jaw gripper, which is displaceable in three directions perpendicular to one another and is situated on a holder (2) for gripping one bobbin (5) in each case, characterised in that the gripper (3) which is displaceable via the holder (2) is arranged securely centred between two swivellable strips (11) of the holder (2) on a median defined by two fixed end regions of the holder (2), which strips are arranged at an angle to each other and can be brought into engagement with the respective bobbin circumference, the holder (2) being provided with sensors (16) for fixing the gripper position by contact of the strips (11) with the bobbin circumference at a predetermined angle between the respective strip (11) and the median.

2. Transport device according to Claim 1, characterised in that the holder (2) is arranged on a transport arm (1).

3. Transport device according to Claim 1 or 2, characterised in that the strips (11) are constructed as parts of levers (7) which are spring-prestressed in the direction of the gripper (3) and are attached so as to be swivellable substantially adjacently to one another.

4. Transport device according to Claim 3, characterised in that the two levers (7) are prestressed by a common compression spring (12).

5. Transport device according to one of Claims 1 to 4, characterised in that the strips (11) are arranged so as to be adjustable relative to the median.

6. Transport device according to one of Claims 1 to 5, characterised in that the gripper (3) is supported resiliently in relation to the holder (2).

## Revendications

1. Dispositif de transport pour des bobines (5) de matériau en bande, en particulier de matériau d'emballage, d'un emplacement de stockage à un poste d'utilisation d'une machine à emballer, en particulier une machine à emballer des cigarettes, comportant un moyen de saisie (3), en particulier un moyen de saisie à mâchoires, agencé sur un support (2) et déplaçable dans trois directions perpendiculaires les unes aux autres, destiné à saisir une bobine (5), caractérise en ce que le moyen de saisie (3), déplaçable au moyen du support (2), est agencé entre deux cornières (11) du support (2) formant un angle l'une par rapport à l'autre, susceptibles d'être pivotées et mises en contact avec le pourtour de la bobine correspondante, de manière centrée sur une bissectrice définie par deux zone d'extrémité fixes du support (2), le support (2) étant muni de capteurs (16) prévus pour déterminer la position du moyen de saisie, par le contact des cornières (11) avec le pourtour de la bobine sous un angle prédéterminé entre la cornière correspondante (11) et la bissectrice.

2. Dispositif de transport selon la revendication 1, caractérisé en ce que le support (2) est agencé sur un bras de transport (1).

3. Dispositif de transport selon la revendication 1 ou 2, caractérisé en ce que les cornières (11) sont agencées sous forme de parties de leviers (7) précontraints par ressort en direction du moyen de saisie (3), lesquels sont articulés de manière pivotante sensiblement au voisinage l'un de l'autre.

4. Dispositif de transport selon la revendication 3, caractérisé en ce que les deux leviers (7) sont précontraints par un ressort de pression (12) commun.

5. Dispositif de transport selon l'une quelconque des revendications 1 à 4, caractérisé en ce que les cornières (11) sont agencées de manière réglable par rapport à la bissectrice.

6. Dispositif de transport selon l'une quelconque des revendications 1 à 5, caractérisé en ce que le moyen de saisie (3) s'appuie contre le support (2) par l'intermédiaire de ressorts.
